(19) Europäisches Patentamt
European Patent Office
Office européen des brevets

(11) **EP 2 835 769 A1**

(12) **EUROPEAN PATENT APPLICATION**

(43) Date of publication:
**11.02.2015 Bulletin 2015/07**

(51) Int Cl.:
***G06N 99/00*** *(2010.01)*

(21) Application number: **13306123.4**

(22) Date of filing: **05.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Movea**
**38000 Grenoble (FR)**

(72) Inventors:
• **Caritu, Yanis**
**38134 Saint Joseph la Rivière (FR)**
• **Cortenraad, Hubertus M. R.**
**38120 Saint Égrève (FR)**
• **Jallon, Pierre**
**38700 Corenc (FR)**

(74) Representative: **Nguyen Van Yen, Christian**
**Marks & Clerk France**
**Conseils en Propriété Industrielle**
**Immeuble Visium**
**22, Avenue Aristide Briand**
**94117 Arcueil Cedex (FR)**

Remarks:
A request for correction of drawings has been filed pursuant to Rule 139 EPC. A decision on the request will be taken during the proceedings before the Examining Division (Guidelines for Examination in the EPO, A-V, 3.).

(54) **Method, device and system for annotated capture of sensor data and crowd modelling of activities**

(57) The invention discloses a method, a device and a system to build and/or use models for estimating behaviours of, or situations of interest to users. Said users have a device which is configured to capture at least a first dataset of sensor data in relation to the behaviour or situation. A set of processing capabilities is configured to capture first datasets comprising sensor data and second datasets comprising annotated data in relation to the behaviour or situation and to further configure at least a model. The device is further configured to adjust parameters of the at least a model to the characteristics of the user or of a group of users. The invention allows for an improvement over the prior art by allowing collection of a vast amount of data that will optimize the fit of the models to the behaviour or situation.

FIG.3

## Description

The present invention improves the functionalities of electronic devices to provide more value added services to their users. More specifically, it applies to the use of different types of devices equipped with sensors of various kinds. The sensors are used in a user specific context to capture data in order to record and predict any activity, behaviour, or situation of interest to the user. The sensor data, in combination with other data relevant to the activity, behaviour, or situation is sent to, and stored in, databases which are used to develop prediction models for the user specific context.

To achieve these improvements, the present invention uses two technologies: embedded sensors and data analysis and modelling algorithms.

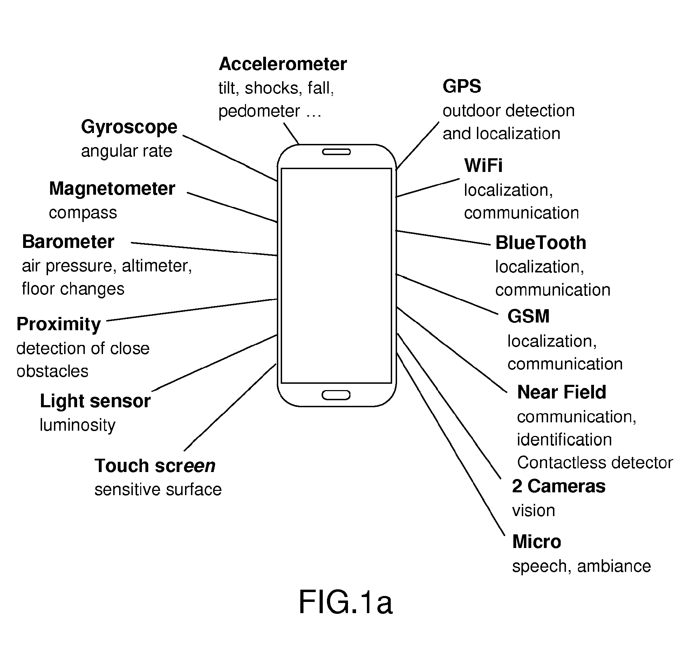

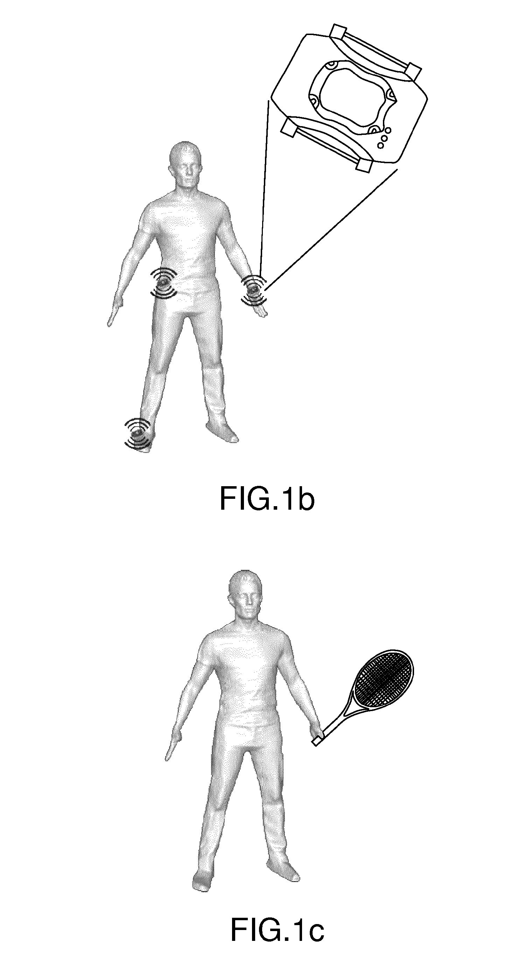

First of all, devices are getting more and more equipped with embedded sensors. Some examples of these devices are consumer electronics like smartphones or tablets, home automation and protection systems, health monitoring devices, sporting equipment, etc.. By way of example, a smart phone may include accelerometers, gyrometers, magnetometers, a localisation receiver (compatible with the Global Positioning System - GPS - or other type of Global Navigation Satellite System - GNSS, like Galileo or Beidou), pressure sensors, cameras, etc. (see figure 1 a). One of the many possible applications of all these sensors in the smart phone is the characterisation of the movements, postures, and activities of the carrier of the device (lying, sitting, walking, running, etc.). The signals and data indicative of the context can be transmitted and stored in a remote database for storage and analysis.

Second, the use of data analysis and modelling tools allows the extraction of relationships between the captured sensor signals and the data representative of the activity, behaviour, or situation. Simple statistical analysis (single or multivariate regression analysis for instance), with probabilistic or deterministic models can be used. More sophisticated statistical techniques, the selection of which will depend on the application, can be used (principal component analysis, Bayesian modelling, etc...). Some of these models will be improved by a learning step (hidden Markov models, neural networks..). The application of such modelling techniques for posture/activity analysis using motion sensors has been disclosed notably by the PCT application published under n° WO2010/122172, of which the applicant of the instant patent application is one of the co-assignees.,. This patent application discloses a method to determine the list of most likely states of a mobile element based on observations, sensor measurements and a selection of adequate probability functions.

The accuracy of the models depends upon the quantity and quality of the state data which can be correlated to the sensor measurements. Creating these databases currently requires significant time and effort. In addition, the different types of knowledge and techniques involved in the proper capture and interpretation of the data will not always be available in the same company/organization.

This is a significant limitation to a more general use of these modelling techniques which would bring increased benefits to the users.

This is an object of the present invention to overcome this limitation.

To this effect, the invention discloses a set of processing capabilities configured to exchange data with: first capabilities configured to produce first datasets, each first dataset comprising at least sensor readings in relation to at least one of a behaviour of, and a situation of interest to at least a person; second capabilities configured to capture second datasets, each second dataset comprising at least variable data in relation to the at least one of a behaviour of, and a situation of interest to said person, said variable data being referenced in time with a corresponding first dataset; said set of processing capabilities being further configured to produce third datasets, each third dataset comprising an estimate of a state characterizing at least one of a behaviour of, and a situation of interest to a user, said estimate being based on an input in a model of at least sensor readings in relation to the at least one of a behaviour of, and a situation of interest to said user, wherein said model of a selected type is built from a calculation using first datasets and second datasets for the at least a person.

The invention also discloses a method of building a model for estimating at least one of a behaviour of, and a situation of interest to a user, said method comprising: a step of capturing first datasets, each first dataset comprising at least sensor readings in relation to at least one of a behaviour of, and a situation of interest to at least a person; a step of capturing second datasets, each second dataset comprising at least variable data in relation to the at least one of a behaviour of, and a situation of interest to said person, said variable data being referenced in time with a corresponding first dataset; said method further comprising a step of selecting a type of model adapted to process the first datasets and the second datasets and a step of calculating parameters of said model based on a comparison between a transform of the first datasets and the second datasets.

The invention also discloses a method of estimating a state characterizing at least one of a behaviour of, and a situation of interest to a user, said method comprising at least : a step of capturing a first dataset comprising at least sensor readings in relation to at least one of a behaviour of, and a situation of interest to the user; a step of selecting a model built from first datasets for at least a person and second datasets for said at least a person, said second datasets comprising at least variable data in relation to the at least one of a behaviour of, and a situation of interest to said at least a person, said variable data being referenced in time with a corresponding first dataset; a step of producing a third dataset comprising at least an estimate of a state characterizing at least one of a behaviour of, and a situation of interest to the user, said estimate being based on an input in the model of at least the first dataset for the user.

The invention also discloses a device comprising: a first capability configured to one of produce and receive a first dataset comprising at least sensor readings in relation to at least one of a behaviour of, and a situation of interest to a user; a processing capability configured to use a model built from first datasets for at least a person and second datasets for said at least a person, said second datasets comprising at least variable data in relation to at least one of behaviours of, and situations of interest to said person, said variable data being referenced in time with a corresponding first dataset; produce a third dataset comprising at least an estimate of a state characterizing at least one of a behaviour of, and a situation of interest to the user, said estimate being based on an input in the model of at least the first dataset.

The invention provides a complete and coherent system for developing applications requiring the fusion of data from various kinds of sensors like motion sensors, temperature sensors, position sensors, etc.. The system covers the whole process, from supervised or guided data collection and annotation, to fusion model conception and modification. The system is designed to help e.g. application developers, with no experience in data fusion or sensor management, develop the required models for their application.

The models or applications can be developed for a single person or for a population, where crowd sourcing and cloud modelling techniques allow the collection of vast amounts of data to improve the statistical accuracy of the model. The invention also incorporates methods for the customization and personalisation of the models to take into account the specific requirements or characteristics of individual or groups of individuals for the purpose of optimizing the performance of the data fusion models.

The invention is capable of working in many different configurations, where one or more electronic devices may be used to capture sensor signals or other data related to the situation or behaviour of interest to the person or to the population. The electronic devices range from personal and portable, like a smartphone, to a fixed server as used for example in home automation, and may include the sensors themselves, or may receive the sensor data from connected (accessory) devices.

The invention will be better understood and its various features and advantages will become apparent from the description of various embodiments and of the following appended figures:

- Figures 1 a, 1 b and 1 c represent devices equipped with different types of sensors that may be used to implement the invention in various embodiments thereof;
- Figure 2 represents a data flow in a system to carry out the invention according to some of its embodiments;

- Figure 3 represents a functional architecture of a system to carry out the invention according to some of its embodiments;
- Figures 4a and 4b respectively represent motion signals captured during monitoring of an activity and annotated data representative of this activity in an embodiment of the invention;
- Figure 5 represents an observation vector and a state vector which are used to capture, transport and store the information relative to an activity in an embodiment of the invention;
- Figure 6 represents a view of a functional architecture of a system to implement an annotation step according to an embodiment of the invention;
- Figure 7 represents a conceptual view of a model conception phase of the invention;
- Figures 8a and 8b represent view of datasets used in a model conception phase to determine the step length of a person in two embodiments of the invention;
- Figure 9 represents a conceptual view of a model personalization phase in an embodiment of the invention;
- Figures 10a and 10b represent two views of datasets used in a model conception phase to determine the type of movement of a person in another embodiment of the invention;
- Figures 11a, 11b, 11c, 11d and 11e represent different embodiments to use the system of the invention, with different localizations of the model processing;
- Figures 12a, 12b, 12c and 12d represent different embodiments of the invention where the model conception and usage and data storage can be split in different locations.

Figures 1 a, 1b and 1c represent devices equipped with different types of sensors that may be used to implement the invention in various embodiments thereof.

Consumer electronic devices are getting equipped with more and more sensors and are getting more and more connected. A typical example of this trend is the smart phone displayed on figure 1 a where it seems that new sensors are added with every new phone model or generation. It includes a plurality of means to be connected (Bluetooth, wifi, 3G/4G,...) and is equipped with several micro-electro-mechanical sensors (or MEMS), e.g. accelerometers, gyrometers magnetometers or pressure sensors. These motion sensors enable the smart phone to be used, for example, for indoor pedestrian navigation where no GPS signal is available. If a GPS signal is available, it is possible to precisely compute the distance travelled by the user between two locations and to compare it with a distance calculated from the number of steps walked and a step length model in combination with the accelerometer measurements. A third type of data, e.g. the trajectory travelled on a map (map matching), can be fused with the first two to improve accuracy. In addition, the smart phone being equipped with a key board, a microphone and voice recognition software, it is possible to use it in conjunction with the measurements of the sensors so that the user may describe the situation/behavior to augment the data. Furthermore, sensor measurements and recordings of comments will be automatically referenced in time or time aligned and can, in addition, be time stamped using the clock of the phone operating company, which is very precise.

Except for a number of simple applications, the model conception is very computationally demanding. Therefore, it would take a lot of processing and battery power of e.g. a smart phone to perform the model conception locally. In addition, for many applications, a large (crowd-sourced) database is required to build the model, which means that even if, with advances in technology, it would be possible to perform the computations locally, it might not be the preferred solution. This is a limitation of the prior art that the invention solves.

Several applications such as pedestrian navigation, activity monitoring, or electronic sports equipment like a tennis racket require a motion sensing module. The applicant has developed a multi-sensor device branded MotionPod™, which may be used as a motion sensing module attached to the bracelet (represented on figure 1b). The sensing device can also be attached to clothes and be used as a wearable device. Also, similar devices of other vendors with similar functionalities may be used as a substitute sensing device.

The sensing device comprises a power supply and a channel of transmission of motion signals to a base station, which may be e.g. a smartphone or a tablet (not shown). Radiofrequency transmission can be effected with a Bluetooth waveform and protocol or with a Wi-Fi waveform and protocol (Standard 802.11g). Transmission can be performed by infra-red or by radiofrequency. The transmitted signals may be generated by a computation module (not shown) either embedded in the device itself, or embedded into a base station or distributed between the device and the base station. The device comprises at least a computation module that deals with some processing of the sensors.

This computation module comprises a microprocessor, for example a DSP Texas Instruments TMS320VC5509 for the most demanding applications in terms of computation time, or a 32-bit microcontroller with ARM core, for example one of those from the STR9 family, notably the STR9F12FAW32 from STM. The computation module also preferably comprises a flash memory necessary for storing the code to be executed, the permanent data which it requires, and a dynamic work memory. The computation module receives as input the outputs from the different sensors. On the one hand, angular velocity sensors (not shown) have the function of measuring the rotations of the device in relation to two or three axes. These sensors are preferably gyrometers. It may be a two-axis gyrometer or a three-axis gyrometer. It is for example possible to use the gyrometers provided by Analog Devices with the reference ADXRS300. But any sensor capable of measuring angular rates or velocities is usable. It is in particular possible to envisage a camera whose image processing compares successive images so as to deduce therefrom the displacements which are combinations of translations and of rotations. It is then necessary, however, to have a substantially greater computational capability than that needed by a gyrometer.

It is also possible to use magnetometers the measurement of their displacement with respect to the terrestrial magnetic field makes it possible to measure the rotations with respect to the frame of reference of this field, it is for example possible to use the magnetometers with the reference HMC1001 or HMC1052 from the company Honeywell or KMZ41 from the company NXP. Preferably, one of the sensors is a three-axis accelerometer (not shown). Advantageously, the sensors are both produced by MEMS (Micro Electro Mechanical Systems) technology, optionally within one and the same circuit (for example reference accelerometer ADXL103 from Analog Devices, LIS302DL from ST MicroElectronics reference gyrometer MLX90609 from Melixis, ADXRS300 from Analog Devices). The gyroscopes used may be those of the Epson XV3500 brand.

The device may therefore comprise a three-axis accelerometer, a three-axis magnetometer, a preprocessing capability for preprocessing signals from the sensors, a radiofrequency transmission module for transmitting said signals to the processing module itself, and a battery. This movement sensor is called a "3A3M" sensor (having three accelerometer axes and three magnetometer axes). The accelerometers and magnetometers are commercial microsensors of small volume, low power consumption and low cost, for example a KXPA4 3628 three-channel accelerometer from Kionix™ and Honeywell™ magnetometers of HMC1041Z (1 vertical channel) and HMC1042L (2 horizontal channels) type. Other suppliers exist: Memsic™ or Asahi Kasei™ in the case of magnetometers and STM™, Freescale™, and Analog Device™ in the case of accelerometers, to mention only a few. In a sensing device of this type, for the 6 signal channels, analog filtering only may be performed and then, after analog-digital (12 bit) conversion, the raw signals are transmitted by a radiofrequency protocol in the Bluetooth™ (2.4 GHz) band optimized for consumption in this type of application. The data therefore arrives raw at a controller, which can receive the data from a set of sensors. The data is read by the controller and acted upon by software. The sampling rate is adjustable. By default, the rate is set at 200 Hz. However, higher values (up to 3000 Hz, or even higher) may be envisaged, allowing greater precision in the detection of shocks for example. An accelerometer of the abovementioned type is sensitive to the longitudinal displacements along its three axes, to the angular displacements (except if the rotation axis is parallel to the direction of the Earth's gravitation field and if it intersects the sensor) and to the orientations with respect to a three-dimensional Cartesian reference frame. A set of magnetometers of the above type serves to measure the orientation of the sensor to which it is fixed relative to the Earth's magnetic field and therefore orientations with respect to the three reference frame axes (except about the direction of the Earth's magnetic field). The 3A3M combination delivers smoothed complementary movement information.

It is also possible to include in the device two micro-gyroscope components (having two rotation axes in the plane of the circuit and one rotation axis orthogonal to the plane of the circuit). The addition of this type of sensor provides a wealth of possibilities. It allows typical IMU (Inertial Measurement Unit) preprocessing, which makes it possible to deliver a dynamic angle measurement. The 3A3M3G combination (in which G stands for gyroscope) delivers smoothed complementary movement information, even for rapid movements or in the presence of ferrous metals that disturb the magnetic field.

Depending on the application scenario, such motion sensing module ( MotionPod™) can be borne by a user like a watch attached to his/her wrist or attached to its ankle, to a shoe, to its waist, in all cases using a strap. The device can also be fixed to a belt, or carried in a pocket. More than one device can be borne by a user, notably if it is necessary to monitor in detail the activities of a person.

Such activity monitoring systems, including pre-calibration of the sensors, are disclosed by the US patent applications published under n° US-2012-0062718, US-2012-0059494, US-2012-0078594, US-2012-0072165, US-2012-0158351, US-2012-0101785, US-2012-0143094, US-2012-0165705, and PCT patent applications filed under n° PCT/EP2013/054561 and PCT/EP2013/054563, co-assigned to the applicant which are incorporated herein by reference. The method and system of the instant invention will be advantageous to improve the efficiency of these systems and methods.

Sporting equipment is getting equipped with sensors. For example, by mounting motion sensors in a tennis racket, like the one shown of figure 1 c, the movements of the player can be analyzed and the tennis swings classified. A system and method to this effect is disclosed by PCT patent application n° PCT/EP2013/058719 assigned to the applicant, which discloses a classification of the timed impacts of a tennis ball on a racket and a monitoring of the movements of the racket between the timed impacts. Such a system will benefit from the improvement provided by the instant invention which will allow sharing of different models and of parameters specific to various categories of players. Systems of the same type can be used for other sports where the motion or movement of sporting equipment is important, such as golf, table tennis, baseball, etc...

More broadly, people's homes and cars are also getting more and more equipped with (communicating) sensors in order to increase security, comfort, and energy efficiency. Air pollution and allergy sensors are used to monitor the air quality, which can serve to warn persons with a fragile health or a certain allergy. In addition, a network of 'web sensors' connected over the internet may provide e.g. environmental information (like weather, traffic, etc.).

With the increase of the number of sensors, the data fusion needed to convert the various signals of the sensors into desired outputs for the user is getting more and more complex. Each individual application requires a lot of experimentation and testing to optimize the fusion algorithms and make them perform adequately for a large variety of users.

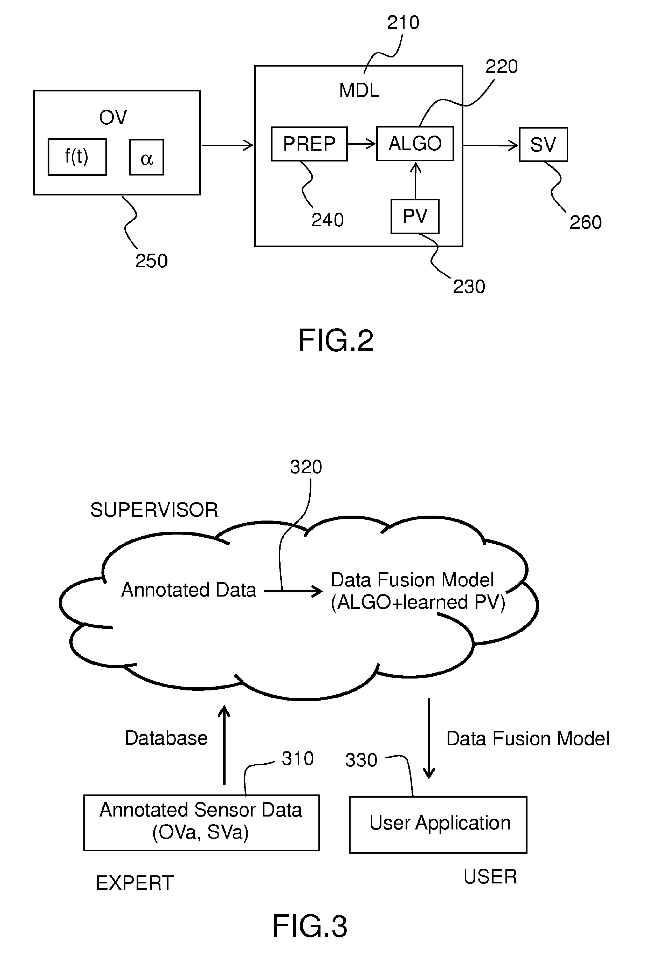

Figure 2 represents a data flow in a system to carry out the invention according to some of its embodiments.

We start by giving some definitions which will be used throughout the description of the invention in relation to figure 2.

The actual data fusion algorithm (220, ALGO) is incorporated in the data fusion model (210, MDL). The variety of models that can be used in the framework of the invention will be described in detail in relation to figure 3. The parameters of the ALGO are referred to as the Parameters Vector (230, PV), which represents the settings of the algorithm that are used to control and adapt the algorithm to the application/situation at hand. The MDL further contains a pre-processing module (240, PREP) that may be used to clean and/or convert the inputs to the MDL to the correct format for the ALGO. The pre-processing may contain any kind of signal processing or feature extraction (averaging, filtering, Fast Fourier Transform, etc.).

The input to the MDL is referred to as the first dataset or the Observation Vector (250, OV), and the output of the MDL is referred to as the second dataset or State Vector (260, SV). For example, in an Activity Monitoring Device (AMD), where the activity of the user is deduced from motion sensors, the OV includes the signals of the motion sensors and the SV represents the activity of the user in discrete states (for example walking, standing, sitting down, lying, ...) . In another example of indoor navigation using motion sensors, the OV is also made up from the signals of the motion sensors, but the SV comprises the step length which can take a continuous range of values. Because the step length of the user depends also on his/her characteristics (e.g. his/her height) , these characteristics may also be included in the OV. In a tennis racket equipped with motion sensors, the OV contains the motion signals from the sensors but may also include information on the type of court or on the player (right or left handed).

In other words, the OV is made up from variable and fixed data that is needed as an input to the data fusion model. This information can be time dependent data such as the sensor signals (represented by 'f(t)' in figure 2), or constant data such as the characteristics of the user (represented by '$\alpha$' in figure 2).

In the indoor pedestrian navigation example, the motion signals from the sensors have to be converted in a walking distance by determining the number of steps the user takes and his or her step length. The step length of the user may depend on many different factors, such as e.g. the user's height, sex, age, and weight. This means that in order to develop a robust algorithm for pedestrian navigation the motion signals have to be analyzed for a large and diverse panel of test subjects, which takes a lot of time and effort.

Similarly, in order to develop the fusion algorithm for the electronic tennis racket that can characterize the different facets of the tennis swings, experiments with different types of tennis players performing a large amount of swings covering all possible swing variations have to be performed. Obviously, building such a database is a time consuming effort.

In the example of air quality monitoring, a database has to be constructed between the air quality and the effect it has on persons, e.g. by monitoring the heart or breathing rate. Based on the acquired knowledge, an application can be created to warn persons of a fragile health when they are performing or plan to perform activities that would take too much effort considering the current or predicted air quality. These relationships may depend on many different health and environmental factors, and may therefore require building an extensive database.

These examples also bring forward the fact that not all the expertise to develop the complete fusion algorithm is necessarily present in the same company. In the example of the electronic tennis racket, the company producing the tennis racket most likely does not have the competences to develop such algorithms, and the company with the expertise in sensors, signal processing and the creation of the algorithm does not have the experience to produce sports equipment.

When performing the experiments and building the database to develop the fusion algorithm, care must be taken to use a correct variety of test subjects in order to obtain a fusion algorithm that can be applied to different situations. Nevertheless, even after building an extensive database, the fusion algorithm might not perform optimally for every individual user. Therefore, a user should be able to personalize and optimize the general fusion algorithm and its parameters in order to optimize its performance for his or her situation(s). This means that the user should be able to produce and provide his or her personal data needed to adjust the general model in a personalization process.

In the framework of this invention, it is proposed to develop, distribute, update, and personalize fusion algorithms and their applications. This system has the advantage to facilitate the creation of fusion algorithms for new applications by providing a streamlined process for the creation and augmentation of databases which can be used to develop models designed to provide accurate estimates of variables/states which are representative of behaviors or situations of interest to a population or a person. The concepts of 'behavior' and 'situation of interest' are meant to cover active and passive conditions respectively, i.e. that what is observed is, in the former case, an action of a person and in the latter case, a phenomenon which happens proximal to the person. Also the invention provides means to utilize such models easily to bring valuable information to users in these groups or in other groups of users. The users can optimize the performance of the models and the value of the service delivered to them by personalizing the algorithms to their needs.

In order to explain the invention and describe the details of its different steps, we will often use the example of the development of a basic activity monitoring device (AMD). This device is carried by the user, for example, clipped to the belt of the user, or carried on the user's wrist or in the user's pocket, and is capable of classifying the activities of the user in e.g. the following activities : walking, standing, sitting down, lying. In addition the device may be capable of calculating the walking distance of the user by determining the number of steps and the step length of the user. The AMD will be equipped with motion sensors to determine the user's activity and the walking distance. In its simplest form the motion sensors can be accelerometers, but for more accuracy and/or more advanced features one may include gyrometers or even magnetometers. The signals from the motion sensors will be used for both classifying the activity and determining the walking distance. Even though both problems use the same motion signals, they can be treated independently and two distinct (non-competing) fusion algorithms will be developed, one for each of them.

Although we will use the example of the AMD throughout the description, other examples will be used in order to illustrate the extent of the field of application of the invention.

Groups of users equipped with smart phones, activity monitoring devices, or tennis rackets equipped with sensors can send OV and SV to an application server using their smart phone. The smartphone can therefore be at the same time the sensor platform producing OV, the capture platform to capture and time stamp SV and enter personal info (height, weight, age, sex, etc...) and the communication platform. The application server may be distributed in various locations, e.g. one in the vicinity of a definite user.

For instance in the case of the tennis racket, the application server can be a smartphone, tablet or laptop located close to the tennis court to which the racket transmits its motion signals (first dataset, OVa). The server may also be capable of receiving images of the players from a camera (second dataset, SVa). OVa and SVa can be transmitted in real time to a remote server or a cluster of distributed servers through a 3G/4G, satellite connection, or the data can be transmitted off-line. The data will be processed on the server to design a model suited to the activity to be estimated. Next, a version of the model may be downloaded on the application server for local use and updated periodically. Consequently, there is no need any more to use a camera to obtain SVa. The server and/or the laptop may include software including routines which will direct by a vocal command a user to execute actions (e.g. "lean more on right leg"...). The system of the invention may therefore be used as a customized online tutorial.

The technology of cloud computing allows many variations of this architecture with bits of data and models being distributed on various machines, physical or virtual. Communities of users, possibly created by service providers may share various models. Players of various levels or belonging to various categories/communities/constituencies in the general population of tennis players may therefore compare and improve their performance. Of course, the same holds true for other sports where style of a gesture is important, like golf, ski, swimming. Activity monitoring performed with a system of the invention may also include physical training (running, trekking, weight watching, etc...) or health monitoring from a distance. In the latter case, it is possible to envisage that heart beats of a person who is recovering at home from a heart attack be monitored by a device which has learnt to trigger alarms in case of anomalies.

Figure 3 represents a functional architecture of a system to carry out the invention according to some of its embodiments.

The proposed invention consists of 3 phases which are distinct in general and will be explained in more detail below.

-    Annotation (310, ANN) phase: This phase can be thought of as the stage where information is gathered during the activity, the behavior of, or the situation of interest to a user for which the MDL will be developed. We will record the annotated observation vector OVa (also referred to as the first dataset), which includes the sensors readings, and the annotated state vector SVa (also referred to as the second dataset), which includes the variable data describing the state. However, in this annotation phase we do not try to understand or discover the link between the OVa and SVa (subscript 'a' denotes annotation). In the activity monitoring example, this means we record the sensor signals of the user's motion during his or her activity (OVa) and annotate this activity (SVa). SVa can be entered manually, or automatically captured, for example by a camera or a positioning system which gather additional data about the behavior/situation of the expert/user. The recorded (OVa,SVa) pairs are stored in the so-called annotated database. The annotation stage can be a supervised stage where the annotated database is created specifically for a certain application in mind. Supervision means that the expert or the user who annotates the SVa data acts under a protocol which has been communicated to him/her. The annotation consists at least in recording the time at which the (sequence of) behavior/situation has occurred. Time stamping may be effected using a clock available either in the vicinity of the sensor (the device collecting the annotation) or on one of the servers, local or distant. It is important that the OVa and SVa are referenced in time so that it is always possible to deduce which SVa belongs to which OVa. The thus constructed annotated database, consisting of the first and second datasets, is the one used in the next step of construction and/or testing of the MDL.

-    Model Conception (320, MC) phase: In this phase, the appropriate algorithm is developed and configured so as to predict an accurate estimate of the state vector when the corresponding observation vector is used as input to the model. The calculated/estimated state vector is also referred to as the third dataset. First, the appropriate type of ALGO is chosen for a certain MDL, and then the parameters vector PV of the ALGO is obtained using the annotated database. In the activity monitoring example the ALGO is a classifier that classifies the users' activity in one of the available classes (running, walking, standing, sitting down, lying, etc...). In the step length model, the ALGO is an equation based on a physical model that converts the step frequency (determined from the motion sensors readings) and the characteristics of the user in a step length.

-    Usage (330,US) phase: Once the Data Fusion Model has been developed using the first and second datasets, it can be released for use. In the user's device, the MDL, consisting of the ALGO and PV, will convert the OV, which includes the sensor signals, into the estimated SV (third dataset). Depending on the application, the result may be displayed to the user, or used for further processing. In the activity monitoring example, this processing may consist of creating the day's activity histogram of the user. In this usage phase, a personalization process may be made available to the user in order to modify and optimize the MDL for his or her personal use.

It is to be noted that the three phases can take place in near real time in embodiments were the user himself/herself is performing the annotation. The model MDL can be adjusted in near real time to the specific (OV,SV) datasets and the user may be able to receive the data in near real time (i.e. in a manner transparent to the user), so that the usage phase takes into account the updated MDL.

Models that can be used in embodiments of the invention comprise:

-    Observation Systems (OS), which contain explicit physical models, as measurement functions (i.e. where the estimated vector is determined directly from the OV data), or state prediction functions of the Kalman filter or Luenberger types, which use a plurality of sensor measurement data to estimate state vectors, using a projection of the variance of the measurements to determine a best fit;

- Universal Approximations (UA) of a function, which are configurable by a set of values (entered as PV); some examples of UA are neural networks, radial basis functions, hidden Markov models, dynamic time warping functions; the UA can be classifiers where the required output is a group of states, as in a number of embodiments of the invention.

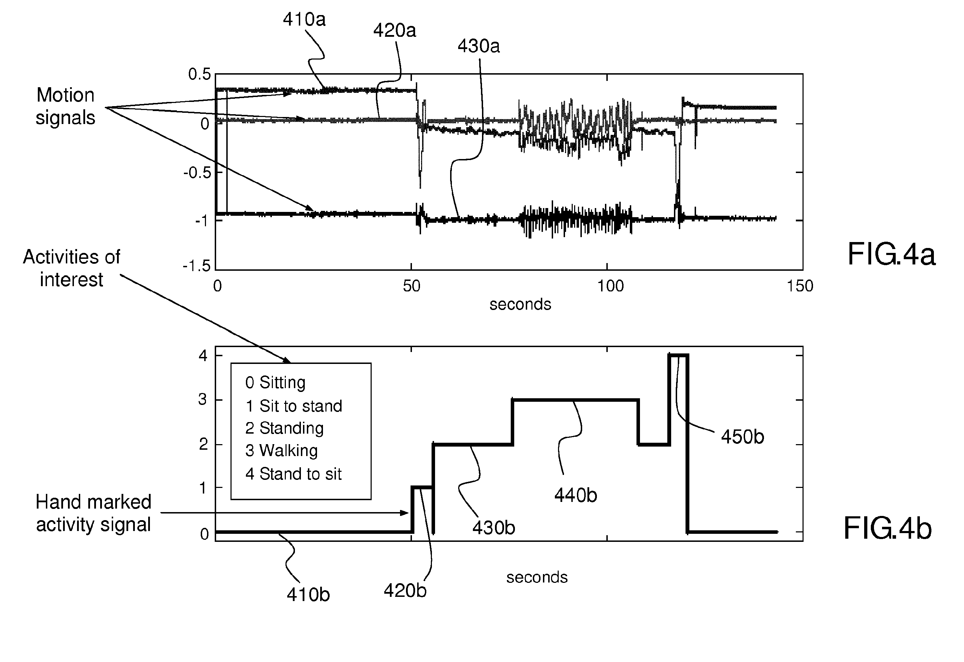

Figures 4a and 4b respectively represent motion signals captured during monitoring of an activity and annotated data representative of this activity in an embodiment of the invention.

We now describe the annotation phase.

The first step is to create an annotated database. In the AMD example, the motion signals (410a, 420a, 430a) of the device are recorded while the user performs the different activities. The different curves represent different axes of the sensor, in this example it is an accelerometer. At the same time the activity of the user is annotated. Figure 4a displays the signals of the different axis of the 3-axis accelerometer. Figure 4b displays the annotated activity. In this case, the annotation was done manually, but it may be automatically provided by a camera system. For example, state 410b corresponds to a situation where the user is sitting. State 420b corresponds to a situation where the user is transitioning from a sitting state to a standing state. State 430b corresponds to a situation where the user is standing. State 440b corresponds to a situation where the user is walking. State 450b corresponds to a situation where the user is transitioning from a standing state to a sitting state. Motion signals (OVa) and annotated states (SVa) have a common time reference (or are time aligned).

The motion signals are stored as the annotated OVa in the database. The OVa is stored in combination with the annotated SVa, which is formed from the annotated activities and, possibly, the walking distance. The annotated database thus contains (OVa,SVa) pairs. In order to build a database and get sufficient (OVa,SVa) pairs, the same kind of acquisition must be performed for a group of users, preferably with different characteristics such as their heights. The fixed data, such as the characteristics of the users, may be included in the OVa or the SVa.

The group of users performing the annotation can be experts, people specifically trained to perform the annotation activity, for instance staff of a service provider, or standard users acting according to procedures communicated to them, in a supervision mode.

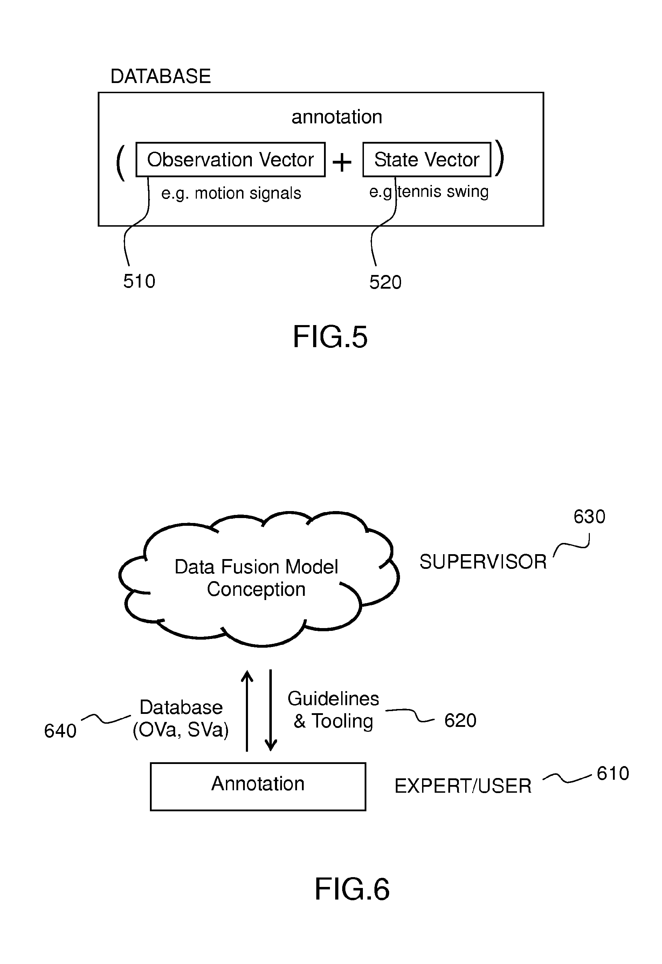

Figure 5 represents an observation vector and a state vector which are used to capture, transport and store the information relative to an activity/situation/behaviour in an embodiment of the invention.

In the example of the electronic tennis racket equipped with motion sensors, a method similar to the example of the AMD example is used. A group of users/players (i.e. a population) will perform different types of tennis swings while the motion signals are recorded (510, OVa) and the type of swing is annotated (520, SVa). The states in this example will be different from those of figure 4b (forehand, backhand, service...). The characteristics of a definite user, for example, if the player is left-handed or right-handed, may be included in the OVa or the SVa in the database. Similarly, other characteristics of the situation or the behavior, e.g. the type of court, may also be included in the OVa or SVa.

Figure 6 represents a view of a functional architecture of a system to implement an annotation step according to an embodiment of the invention.

In order to obtain a high quality database, the annotation experiments have to be performed according to established guidelines, or using predefined tools. Preferably, the experiments are conducted and monitored by an Expert (610, EXP) in a controlled manner. The choice of the Expert will depend on the application and the MDL. In the tennis racket example, the company producing the tennis racket is a most likely choice for the Expert. The guidelines and/or tooling, 620, may be provided to the Expert by the Supervisor, 630, who is in charge of developing the MDL.

The creation of a large database represents a lot of time and effort for the Expert. Alternatively, the database can be filled in a bit less controlled manner by population or a group of users, for example using a (social) network of people. Guidelines can be made available to the group of users, but it will be more difficult to supervise the correct execution.

The former method has the advantage of being controlled and precise, but it is a lot of work to build a large database. The latter method is of a less controlled manner, but has the advantage that it is much easier to build a large database. The statistics might compensate for the lack of (individual) accuracy. The optimum method might also depend on the type of application. Both methods are not mutually exclusive. The former method could build the foundation database by precise annotation, which can then be enhanced by the large volume of collected data using the latter method. The (OVa,SVa) pairs obtained by different methods might be given different weights representing the confidence in the correct execution of the experiments and the quality of the data.

The obtained database with the Annotated Vector pairs (640, OVa, SVa) is subsequently transferred to the servers of the Supervisor, where the MDL will be designed. A number of annotation scenarios and strategies can be contemplated to implement the invention. Some examples of different types of annotation by a user or a group of users are given below. Some of the embodiments use a preprocessing module, 240:

- <u>Annotation by Instruction</u>

A user receives instructions or guidelines from the supervisor, and it is assumed that the user accurately follows the instructions. For example, in the case of activity monitoring we can instruct the users to walk for 1 minute, then run for 1 more minute, then walk again for 1 minute ... The recorded activity pattern (OV) will then be annotated by the instructed activity pattern (SV). Even though the time schedule might not be exactly followed, if the activities are different enough, the PREP module (240) will be able to separate the activities.

The instruction can be quite strict (as above) or can be less strict. Of course, the less the instructions are strict, the more the preprocessing becomes more complicated. A less strict version of the example above is to instruct to mix the walking and running, but not give any time restrictions. Of course, the less the instructions are strict, the more the preprocessing becomes complicated and the larger the chance of having less reliable data.

- Annotation by Sensor

In this scenario, we can use an additional/external sensor for annotation. In an example of pedestrian navigation based on motion sensors, a GPS can be used to validate the walking distance and thus the step length. Suppose that the motion sensors and the GPS are in a smart phone that is used to run the pedestrian navigation application. If it is detected that the user is walking and that a GPS signal is available (outdoors), the step length of the user can be calculated and annotated using the GPS data. The thus derived step length can then be used for indoor navigation when no GPS is available. Another example of a sensor which can be used for an annotation by sensor is a camera which can record, for example, gestures performed by the expert/user.

For the annotation by a sensor to work, the supervisor has to ensure that each MDL/application is accompanied by a list of sensors that can be used for annotation, and guidelines on how to perform the annotation. The system running the MDL/application will then look for the sensor, and perform the annotation if possible. The decision whether or not to look for sensors to annotate, might depend on the performance of the MDL. If the MDL is performing perfectly, it is not needed to use computing and battery power to perform the validation.

- Annotation by Location

If a user is performing an activity unknown/unrecognizable to an activity monitoring device, but at a known location (e.g. by GPS), the system can look up what other users have done at that location. For example, if performing an activity at a swimming pool, there is a significant probability that the activity is swimming. However, at the swimming pool the user can also dive or just watch. Therefore we need to compare the OV with OVs in the database to determine the exact activity. Note that this type of annotation requires sharing activities-locations data among a community of users.

- Annotation by User Input

This can be considered as manual annotation without following instructions. In the AMD example, the user performs an activity measured by sensors (OVa) and in a time-stamped log (SVa) the user will keep track of the activities. If the activities are different enough, and the annotation is correct, the preprocessing module will be able to handle the input. Alternatively, the device or smart phone recognizes a repetitive activity, and asks the users what it is. It is obvious that this type of 'free' annotation, requires significant processing to construct reliable annotation data.

In the case of expert annotation (under supervision) strict guidelines are followed and the conditions are controlled, warranting a high quality annotated database. Other types of annotation may be much less controlled and supervised, which means that if inaccurate annotated (OVa,SVa) pairs are provided, the quality of the MDL may be degraded. However, the advantage of having groups of users provide (OVa,SVa) pairs (without supervision) is to enlarge the database in order to increase the statistics and performance of the MDL. This user data can be given different weights compared to expert data to account for the unknown accuracy. Alternatively, the amount of data cleaning or processing required can also be an indicator of the data quality and can be used to determine the weights.

To ensure the quality of the database, it should be possible to filter the incoming data. This avoids that users upload low quality data that might degrade the quality of the database, and thus the quality of the MDL. The filtering also serves as security to avoid people adding flawed or corrupted data on purpose. The filtering can be done on the origin of the data, allowing only data from trusted sources. Alternatively, the new data can be compared to the data already in the database or to the calculated /predicted SV, and if the difference is too significant, the new data is refused.

By keeping track of the origin of the data, flawed data from a suspected source can be removed entirely, even after the fact. Changes in the performance of the MDL can also be used as an indicator to the quality of the last added data.

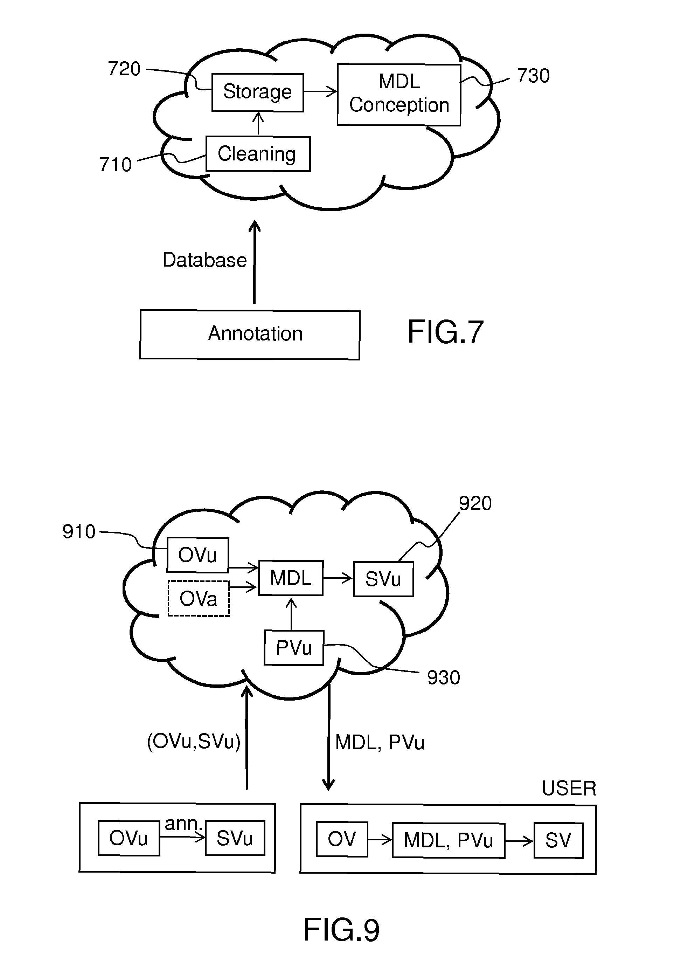

Figure 7 represents a conceptual view of a MDL conception phase of the invention.

After the transfer of the database, a first cleaning or processing step 710 may be performed. The cleaning serves to improve the quality of the OV which will be beneficial during the MDL conception. Referring back to the example of figures 4a and 4b, the OV is made up of the motion signals covering several activities and transitions between activities. In the cleaning process we can remove the transitions and separate the activities, so as to get motion signals fit to each individual activity, resulting in separate (OVa,SVa) pairs for sitting, standing, and walking. In the tennis example, this cleaning may consist in removing any signals that may have been recorded before and/or after the tennis swing in order to make sure the OV contains only the actual swing.

This means that the type of cleaning required depends on the (quality of the) OV and the application. After the cleaning procedure the database can be stored on the server in a storage step 720 of the Supervisor for (re)use in the MDL conception phase 730.

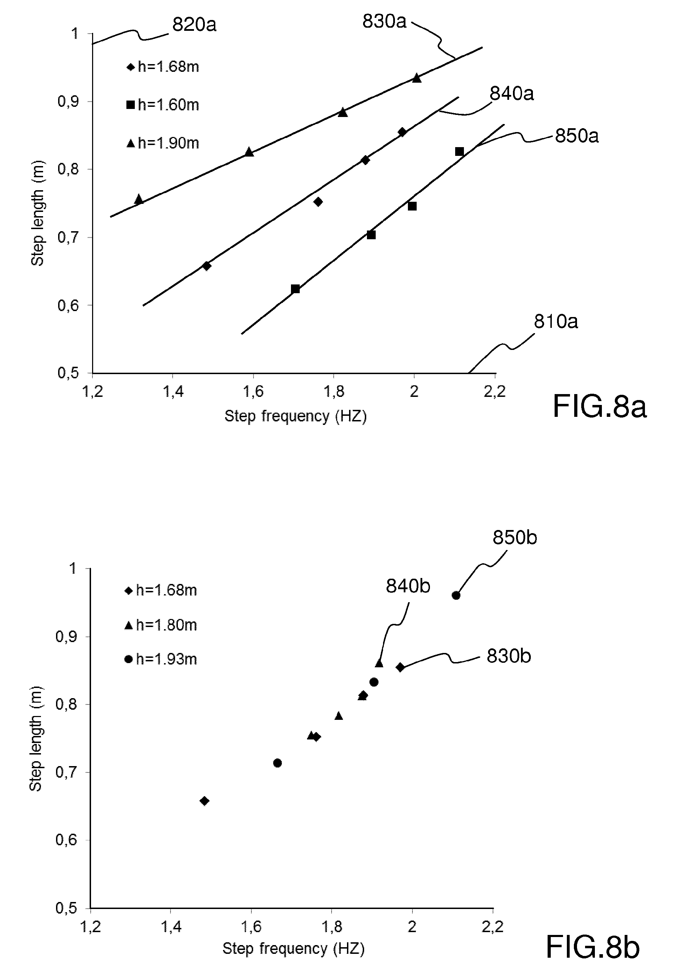

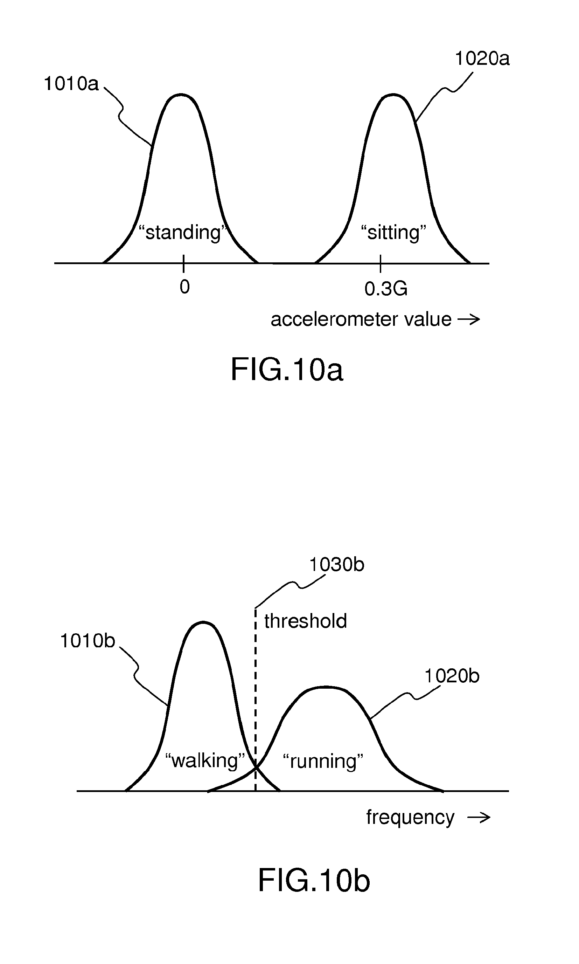

The database can be used in different manners during the MDL conception phase. In a first method, described in relation to figures 8a and 8b, the database is used for testing only after a manual creation of the ALGO and the PV, and in a second method, described in relation to figures 10a and 10b, the database is used to learn the parameters of the MDL.

Figures 8a and 8b represent two views of different datasets used in an MDL conception phase to determine the step length of a person in the AMD example in two embodiments of the invention.

The two figures relate to a first method of designing a MDL for an application where a strong deterministic relationship can be determined between the input and output of the MDL.

The first design method may be used, for instance, in the AMD. There, the step length when the user is walking can be predicted using a physical model taking into account the height of the user and the frequency of the steps (See for example: "Step Length Estimation Using Handheld Inertial Sensors", Valérie Renaudin, Melania Susi, and Gérard Lachapelle, Sensors 2012, 12(7), 8507-8525). In this document, the best linear relationship between step length SL and users height h is presented:

$$ SL = h\left(af_{step} + b\right) + c $$

where $f_{step}$ is the step frequency determined using the motion sensors and a, b, and c are the 3 parameters of the PV that have to be adjusted/learned.

Figure 8a presents annotated data for users of different heights where the step frequency (810a) is deduced from the motion signals in the Ova during the walking stage, and the step length has been verified by external means (SVa, 820a). The figure shows the linear dependence of the step length on the step frequency for three different user's heights, 830a, 840a, 850a. It is apparent from the three lines that this relation depends on the characteristics of the user, in this case the height.

The parameters a,b,c of the ALGO that make up the PV can be based on values taken from literature or can be manually determined from the data of a few users. Once the ALGO and the PV have been determined, the performance of the MDL created from this linear relationship can be validated using the complete (OVa, SVa) database. In this case, it means that the pre-processing module (PREP) determines the frequency of the steps of the user from the motion signals, which is then used as an input to the ALGO. The obtained results of the calculated step lengths (SV) can then be compared to the annotated step lengths (SVa) in the database to validate the performance of the ALGO, in view of PV. The performance can be optimized further by using e.g. a recursive least-squares method to minimize the error between the calculated step lengths of the MDL and the annotated step lengths of the database. This is typical of a learning stage, where by adjusting the parameters a,b,c we minimize the difference between the actual data sets (markers in figure 8a) and the output SV of the MDL (lines in figure 8a). This can be done for the different user heights, or for a certain height of interest in the case of an individual learning stage for a particular user.

In the embodiments of the type displayed on figure 8a, in most cases a limited amount of (OV,SV) pairs have been obtained by the experiments in the annotation phase, with a limited number of users. This means that the model might not be perfect for all users. Figure 8a shows a dependence of the relation between the step frequency and the step length on the user's height that may work for most user's. However, this dependence may not be exactly the same for all users.

Figure 8b shows that for some exceptional users the relation between the step frequency and the step length may be independent of the user's height, as is exemplified by the fact that curves 830b, 840b and 850b, drawn for different user's heights, are almost completely identical. This means that the general MDL and the obtained PV as in figure 8a, with its dependency on the user's height, does not work for these users.

In order to increase performance, the MDL can be customized or personalized for a specific user, as explained below in relation to figure 9. This means that the PV may be adjusted based on user input and adapted to the user's requirements. In the example of figure 8b, this means that the parameters a, b and c of the PV will be adapted for an individual user based on the user's input in order to get a good linear fit to the data points while keeping the user height h fixed at his or her height. Personalization may also mean that, for example, in the AMD the user might want to change classes of activities or add new classes of activities to the (classifier) model corresponding to e.g. the user's hobby.

Figure 9 represents a conceptual view of an MDL personalization phase in an embodiment of the invention.

Personalization is based on input from the user and in many cases implies annotation by the user. This means that the user has to create a database of annotated (OVu, SVu) pairs 910, 920 and upload the database to the server. Using this database, the parameters of the algorithm are adapted and a personalized PVu can be created (without changing the ALGO). Several options exist on how to handle the user database (DBu) for the personalization algorithm and the creation of the personalized PVu:

- PVu 930 is determined only using the DBu, i.e. the data uploaded by the user. In this case the user has to provide a sufficiently large database. This is the best option to have an optimized personal performance, but requires a large high quality database.

- The database DBu is added to the original annotated database DBa to determine PVu. If the DBu is too small compared to the DBa, the impact of DBu on PVu might be too small. In this case only part of DBa should be used, or data in DBu should be given a much larger weight than the data in DBa.
- A personalized PVu can also be obtained by using a preselected part of the DBa upon the user's requirements (without the user providing actual data in a DBu). For example, for a personalized step length estimation for a tall user, we can recalculate the parameters a, b, and c of the PVu using only data in the DBa related to tall test subjects (e.g. >1 m80). By performing such a personalized pre-selection the performance of the model can be increased.

The option to be selected in the list above will depend upon the application and the size of the user's database. The customization might not necessarily consist in adjusting all the parameters in the PV. The customization algorithm might only adjust a subset of parameters (PVu<PV), which can be set in advance, par example by the supervisor. In the step length example this would mean that not all the parameters a, b, and c can be adjusted but only one or two of them. The customized PVu can subsequently be downloaded by the user and should increase the performance of the MDL. The data uploaded by the user in the form of the DBu might be stored on the server after the deduction of the PVu. The DBu can remain property of the specific user, and may only be accessed for his personal use.

However, the advantage of the personalization and the DBu is that the data can be used for the general public. This means that the DBu can be integrated into the DBa to increase its size and increase the general performance of the MDL. The source of the DBu might be kept completely anonymous, and we can link the data from the DBu to the characteristics of the user, without knowing the user's identity. But what is legally enforceable may vary from one jurisdiction to another, depending on local regulation applying to privacy, storage and distribution of private data. Even if anonymity is preserved (which some security agencies may not accept 100%), some users may require specific security measures, including strong authentication to entrust their data to a service provider. Also, care must be taken that some laws prohibit age, sex, religion or race discrimination, including the provision of statistical data based on such segmentation.

Figures 10a and 10b represent two views of datasets used in an MDL conception phase to determine the type of activity of a person in another embodiment of the invention.

In the method that is described below the PV is learned using the annotated database and is most suited to situations where no deterministic prediction model is available. In the AMD example, we want to classify the activity using the motion signals. As shown on figure 4a the accelerometer signals vary depending on the attitude of the user (standing 1010a, sitting 1020a). In order to determine the relation between the accelerometer value and the activity, we can use the annotated database to determine the distribution of the accelerometer readings as a function of the activity performed.

In the above example the motion signals 1010a, 1020a, can be used to distinguish between the activities (standing, sitting), because there is no overlap between the accelerometer signals corresponding to these activities. This means that by putting a threshold at e.g. 0.15g, it is straightforward to classify the activity as 'standing' or 'sitting'. However, in some cases the classification cannot be performed with certainty. This is the case displayed on figure 10b. Consider that using the AMD we would like to have different classes for walking and running. We can use the step frequency as a differentiator and use the annotated database to obtain the frequency distributions for walking and running (1010b, 1020b).

Using an error minimization method we can use the database to obtain a threshold frequency 1030b that can be used as a classifier for the walking and running activities. This example shows that, while the threshold frequency works for most of the cases, it does not classify all cases 100% correctly; some people walk faster than other people run. This means that, for some users, the MDL has to be personalized in order to work properly. The personalization process has already been explained above in relation to the type of embodiments of figures 8a and 8b where a deterministic model can be used. The personalization can be performed using the (annotated) walking/running data from the user. Alternatively, only those (OVa,SVa) pairs are used in the MDL conception which correspond to users similar to the user for which the personalization is performed. For example, for a fit user who performs regular exercise, only those (OVa,SVa) pairs from users who go running on a regular bases, and thus have a higher speed when compared to the general (untrained) population, are used.

When the annotated database is used in the learning process, it is possible to split the annotated database in two parts, and use a first part in the actual learning phase and the second part in a test phase. The first learning database contains the (OVa,SVa) pairs that are used to determine the PV of the ALGO during the learning phase. Once this PV has been determined, its performance is verified using the second test database. In this test phase the OVa is used as an input to the model where the learned PV is applied, and the calculated output SV is compared to the annotated SVa. If PV has been correctly determined in the learning phase, SV would be close to SVa. The error, expressed as E=norm(SV-SVa), can be used to quantify the performance of the ALGO & PV combination. This splitting of the database in a learning and test part is used to verify the correct learning of the PV and avoid over/under fitting.

In many situations the ALGO will be chosen according to the problem, for example by the supervisor. If several candidate algorithms exists, a testing procedure as described above can be followed for each candidate. This means that for each candidate algorithm the error norm E is determined for the testing database after the calculation of PV using the learning database. The candidate with the smallest error is the most likely candidate ALGO for the problem. In other words, the ALGO that is chosen from the list of candidate algorithms is the one that give the smallest error and thus the best fit for the application.

We have discussed the different examples above to show the different ways to use the annotated database, and to show that the type of ALGO and pre-processing used in the MDL depend on the type of application. We have used simple examples, so as not to divert the core of the description from the gist of the invention. More information on the AMD and the classification can be found in patent application WO2010/122172. The person skilled in the art will easily apply a more advanced algorithm for more complicated cases; for example Hidden Markov Models or neural networks using perceptrons or Radial Basis Functions are often used in complex cases where no prediction model is available.

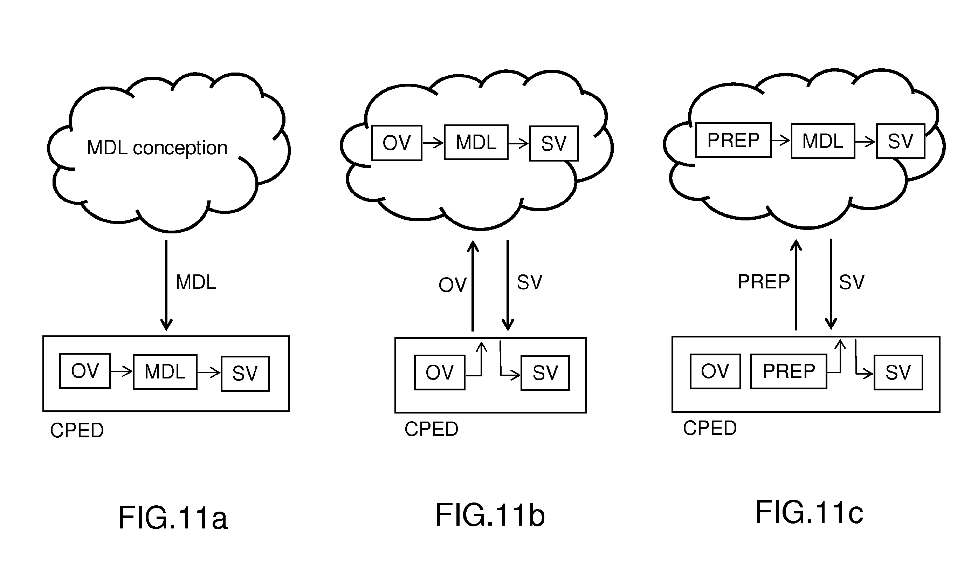

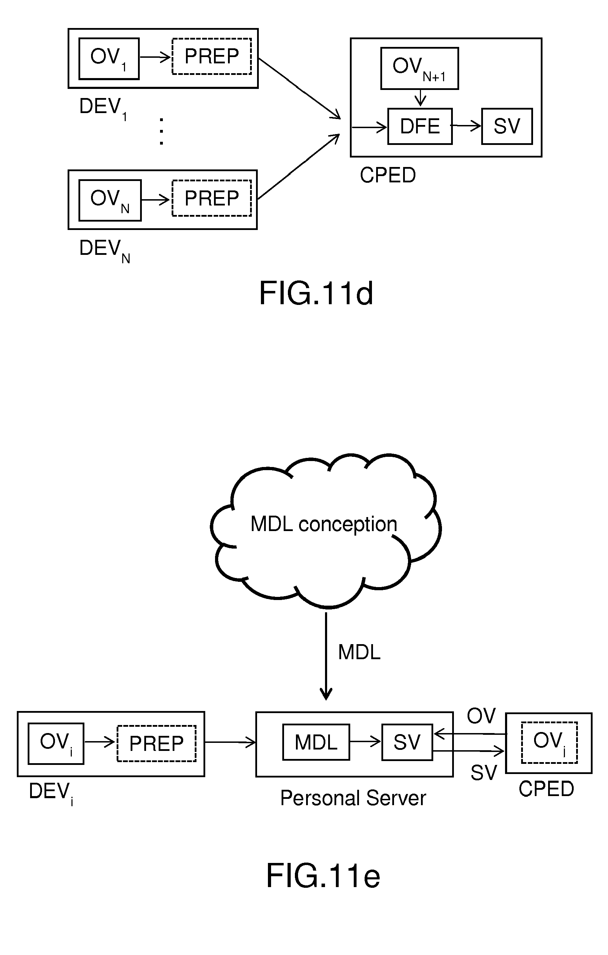

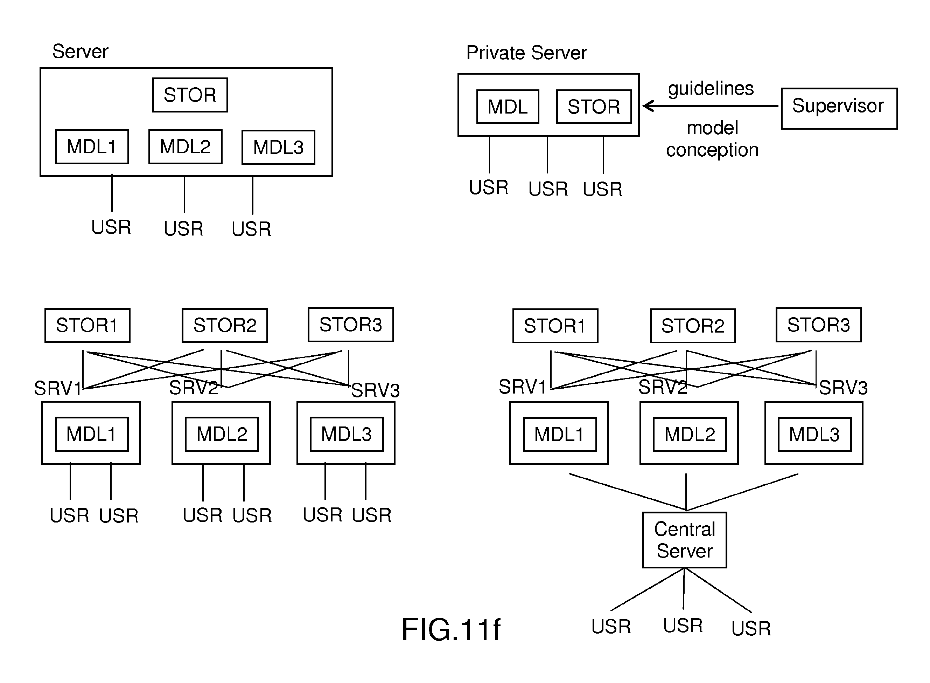

Figures 11a, 11 b, 11c, 11 d and 11e represent different embodiments of a functional architecture to use the system of the invention.

Once the MDL has been designed, a version including PREP, ALGO, and PV is released to the users by the supervisor or service provider. Note that in the discussion of the annotation and the model conception we used the concept of a group of users to collect the (OVa,SVa) pairs. In the discussion below, the user might simply be a user of the MDL who has not been a part of the group of users collecting the data to develop the MDL. Many applications will be centered around connected personal electronic devices (CPED) such as smart phones. However, the same kind of architecture can also be applied to other type of devices, for example, a home server handling home automation. If a CPED is used, several usage modes are possible, which are described below:

-   The user can download the MDL (ALGO+PV) from the server of the Supervisor to his CPED and start running the application with the MDL on his CPED. In this embodiment, represented on figure 11a, once the download is complete, the data capture (OV) is done locally on the user's CPED, as well as the processing; the results of the processing may be communicated visually or orally to the user on its CPED.
-   In another embodiment, represented on figure 11 b, the user uploads the OV produced by his CPED to the server of the Supervisor/service provider. The server processes the user's OV using the MDL and transmits the corresponding SV back to the user. This option requires the transmission of possibly large amounts of data and, possibly, a lot of processing power on the server (for the different simultaneous users). In case the user has a personalized parameters vector PVu, the PVu may be uploaded to the server with the OV, or be stored on the server.
-   In an intermediate option, represented on figure 11 c, the user's CPED does some pre-processing to reduce the amount of data before being uploaded to the server of the Supervisor. The MDL determines the SV, which is then transmitted back to the user.

The selection of the operating mode will depend upon the application. In the example of pedestrian navigation indoor with the assistance of the motion sensors of a smart phone (CPED), a continuous data stream has to be analyzed immediately for navigation purposes. This probably leads to decide that the embodiment of figure 11 a is the most appropriate. In the AMD example, we can collect data (OV) e.g. during the day, and perform the analysis (obtain SV) afterwards. In this case, the data from the AMD can be uploaded after the acquisition to be analyzed by the MDL on the servers, and then be downloaded again to the user (option of figure 11 b). This has the advantage to save processing power and battery life on the CPED.

The MDL and the sensors producing the OV do not necessarily have to be in the same device (DEV). An embodiment of this kind is represented schematically on figure 11 d. In the case of an electronic tennis racket, the sensors are in the racket and the MDL can be in the user's CPED, like the user's smart phone or a laptop. This solution brings the advantage of not requiring a lot of processing power in the racket which means a longer battery life. However, it does imply that the racket needs means to store the data or transmit the data immediately to the device performing the processing.

Different devices might transmit their OV to a central CPED that runs the MDL. Each device might optionally do some pre-processing (PREP) in order to limit the data that has to be transmitted. In a dedicated device like a tennis racket which is always used in the same application, the PREP module does not likely need many updates. However, for multi-functional devices the PREP module might be updated depending on the application. The CPED might also produce its own OV, either by a sensor or by another form of data. For example, for the AMD, the motion sensors might be in an accessory (e.g. wristband, foot pod) but the MDL needs personal input about the user, such as the user's height. To classify the tennis swings, the MDL needs input on whether the player is right handed or left handed. The user's personal characteristics, in other words the user's profile (UPROF), can be stored on the CPED.

For some applications, a personal server can be used to run the MDL, as illustrated on figure 11e. For example, in an application related to home automation the MDL may run on a home server that is connected to one or more devices ($DEV_i$). The user can still use the CPED to obtain the SV, and might even transmit an additional OV to the server.

The different architectures presented in figure 11a through 11e, are not meant as an exhaustive list of architectures. Combinations or variations of these architectures are also possible.

Figures 12a, 12b, 12c and 12d represent different embodiments of the invention where model conception and usage and data storage can be split in different locations.

In the description above, the model conception has been depicted in a cloud-like symbol representing the Supervisor/service provider. The most likely choice for a supervisor is a person or company skilled in the art of data fusion algorithms, like the applicant of the instant patent application. The invention may be implemented on a single server, property of the supervisor. The annotated database is transferred and stored on this server, and all the processing and the MDL conception are performed on this server. Once the design of a version of a certain MDL is released for use, the user(s) can download the MDL from the supervisor's server. Different models (MDLi) for different applications can run on the server at the same time. An architecture of this type is represented on figure 12a.

It is apparent that for more than a few models with a limited amount of users, a single server will not be sufficient. In this case, a network of servers and storage capacities are required, which is referred to as the cloud. It is beyond the scope here to go into details to describe cloud computing (see for example "Cloud Computing: Principles and Paradigms", Rajkumar Buyya, James Broberg, Andrzej Goscinski, John Wiley & Sons, Inc., which is incorporated herein by reference).

For increased capacity (more models with more users) the supervisor can use a network of servers (SRVi) and storage capacities (STORi). The servers can be dedicated to a particular problem (MDLi) and the users can download the models from the specific servers (see figure 12b). Alternatively, the users can go through a central server that handles and distributes the traffic (see figure 12c).

If a certain model is designated only for a certain person/organization/company and for security or privacy reasons the information has to remain in their property, the database and model can be stored on a private server. In this case the Supervisor may have access to provide guideline and supervise the model conception (see figure 12d).

The examples disclosed in this specification are only illustrative of some embodiments of the invention. They do not in any manner limit the scope of said invention which is defined by the appended claims.

**Claims**

1. A set of processing capabilities configured to exchange data with:

- first capabilities configured to produce first datasets, each first dataset comprising at least sensor readings in relation to at least one of a behaviour of, and a situation of interest to at least a person;
- second capabilities configured to capture second datasets, each second dataset comprising at least variable data in relation to the at least one of a behaviour of, and a situation of interest to said person, said variable data being referenced in time with a corresponding first dataset;

Said set of processing capabilities being further configured to produce third datasets, each third dataset comprising an estimate of a state characterizing at least one of a behaviour of, and a situation of interest to a user, said estimate being based on an input in a model of at least sensor readings in relation to the at least one of a behaviour of, and a situation of interest to said user, wherein said model of a selected type is built from a calculation using first datasets and second datasets for the at least a person.

2. The set of processing capabilities of claim 1, wherein at least one of the first datasets and the second datasets further comprises fixed data in relation to one or more features characterizing at least one of the at least one person, the behaviour of, and the situation of interest to said person.

3. The set of processing capabilities of claim 1, wherein the model of a selected type is one of an observation system and a universal approximation.

4. The set of processing capabilities of claim 3, wherein the observation model is a Kalman filter.

5. The set of processing capabilities of claim 3, wherein the universal approximation is one of a neural network and a classifier.

6. The set of processing capabilities of claim 5, wherein the classifier is one of a hidden Markov model and a Dynamic Time Warping function.

7. The set of processing capabilities of claim 1, wherein the first capabilities comprise at least one of an accelerometer, a gyrometer and a magnetometer.

8. The set of processing capabilities of claim 1, wherein the second capabilities comprise at least one of a voice input capability and a character input capability.

9. A method of building a model for estimating at least one of a behaviour of, and a situation of interest to a user, said method comprising:

- a step of capturing first datasets, each first dataset comprising at least sensor readings in relation to at least one of a behaviour of, and a situation of interest to at least a person;
- a step of capturing second datasets, each second dataset comprising at least variable data in relation to the at least one of a behaviour of, and a situation of interest to said person, said variable data being referenced in time with a corresponding first dataset;

said method further comprising a step of selecting a type of model adapted to process the first datasets and the second datasets and a step of calculating parameters of said model based on a comparison between a transform of the first datasets and the second datasets.

10. The method of building a model of claim 9, wherein the comparison is based on an optimization of a fit function between a transform of the first dataset and the second dataset.

11. The method of building a model of claim 10, wherein the model is selected from a list of models based on the optimization results.

12. The method of building a model of claim 9, wherein at least part of one of a first dataset and a second dataset for a person is filtered in or out in response to a test of an impact on the fit function.

13. The method of building a model of claim 9, wherein the parameters of the model are adjusted for a definite user based on one of said definite user's first dataset, second dataset and one or more characterizing features.

14. A method of estimating a state characterizing at least one of a behaviour of, and a situation of interest to a user, said method comprising at least :

- a step of capturing a first dataset comprising at least sensor readings in relation to at least one of a behaviour of, and a situation of interest to the user;
- a step of selecting a model built from first datasets for at least a person and second datasets for said at least a person, said second datasets comprising at least variable data in relation to the at least one of a behaviour of, and a situation of interest to said at least a person, said variable data being referenced in time with a corresponding first dataset;
- a step of producing a third dataset comprising at least an estimate of a state characterizing at least one of a behaviour of, and a situation of interest to the user, said estimate being based on an input in the model of at least the first dataset for the user.

15. The method of claim 14, further comprising, prior to the step of producing a third dataset, a step of inputting in the model data in relation to one or more features characterizing at least one of the user and a behaviour of, and a situation of interest to the user.

16. A device comprising:

- a first capability configured to one of produce and receive a first dataset comprising at least sensor readings in relation to at least one of a behaviour of, and a situation of interest to a user;
- a processing capability configured to:

o use a model built from first datasets for at least a person and second datasets for said at least a person, said second datasets comprising at least variable data in relation to at least one of behaviours of, and situations of interest to said person, said variable data being referenced in time with a corresponding first dataset;
o produce a third dataset comprising at least an estimate of a state characterizing at least one of a behaviour of, and a situation of interest to the user, said estimate being based on an input in the model of at least the first dataset.

17. The device of claim16, wherein the processing capability is further configured for accepting the input in the model of data in relation to one or more features characterizing at least one of the user, a behaviour of, and a situation of interest to the user.

18. The device of claim 16, wherein the first capabilities receive at least part of the first dataset from a second device with capabilities to produce sensor readings.

19. The device of claim 16, further comprising a second capability configured to capture a second dataset, said second dataset being different from the first dataset, comprising at least variable data in relation to the at least one of a behaviour of, and a situation of interest to said user, said variable data being referenced in time with a corresponding first dataset for said user.

20. The device of claim 19, wherein the model is adapted based on characteristics of at least one of the first dataset and the second dataset.

**Accelerometer**
tilt, shocks, fall,
pedometer …

**GPS**
outdoor detection
and localization

**Gyroscope**
angular rate

**WiFi**
localization,
communication

**Magnetometer**
compass

**BlueTooth**
localization,
communication

**Barometer**
air pressure, altimeter,
floor changes

**GSM**
localization,
communication

**Proximity**
detection of close
obstacles

**Near Field**
communication,
identification
Contactless detector

**Light sensor**
luminosity

**2 Cameras**
vision

**Touch screen**
sensitive surface

**Micro**
speech, ambiance

## FIG.1a

FIG.1b

FIG.1c

210

MDL

220

OV

f(t)    α

PREP  →  ALGO  →  SV

240

PV

250

230

260

# FIG.2

320

SUPERVISOR

Annotated Data  →  Data Fusion Model
(ALGO+learned PV)

Database

310

330

Data Fusion Model

Annotated Sensor Data
(OVa, SVa)

User Application

EXPERT

USER

# FIG.3

FIG.4a

FIG.4b

DATABASE

annotation

$($ Observation Vector $+$ State Vector $)$

e.g. motion signals          e.g tennis swing

510                          520

## FIG.5

Data Fusion Model
Conception

SUPERVISOR ⟋ 630

640 ⟿ Database
(OVa, SVa)

Guidelines
& Tooling ⟿ 620

Annotation

EXPERT/USER ⟿ 610

## FIG.6

720 — Storage → MDL Conception — 730

710 — Cleaning

Database

Annotation

**FIG.7**

910 — OVu → MDL → SVu — 920

OVa

PVu — 930

(OVu,SVu)

MDL, PVu

OVu --ann.--> SVu

USER

OV → MDL, PVu → SV

**FIG.9**

FIG.8a

FIG.8b

FIG.10a

FIG.10b

FIG.11a                FIG.11b                FIG.11c

EP 2 835 769 A1

FIG.11d

FIG.11e

FIG.11f

Europäisches
Patentamt

European
Patent Office

Office européen
des brevets

# EUROPEAN SEARCH REPORT

Application Number

EP 13 30 6123

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | M. N. IBARRA-BONILLA, P. J. ESCAMILLA-AMBROSIO, J. M. RAMIREZ-CORTES, C. VIANCHADA: "Pedestrian dead reckoning with attitude estimation using a fuzzy logic tuned adaptive Kalman filter", PROCEEDINGS OF THE 4TH LATIN AMERICAN SYMPOSIUM ON CIRCUITS AND SYSTEMS (LASCAS'4), 27 February 2013 (2013-02-27), XP055095887, DOI: 10.1109/LASCAS.2013.6519054 * the whole document * | 1-20 | INV. G06N99/00 |
| X | J. F.-S. LIN, D. KULIC: "Segmenting human motion for automated rehabilitation exercise analysis", PROCEEDINGS OF THE 34TH ANNUAL INTERNATIONAL CONFERENCE OF THE IEEE EMBS (EMBC'34), 28 August 2012 (2012-08-28), pages 2881-2884, XP032463541, DOI: 10.1109/EMBC.2012.6346565 * the whole document * | 1-20 | |
| X | K. ALTUN, B. BARSHAN, O. TUNÇEL: "Comparative study on classifying human activities with miniature inertial and magnetic sensors", PATTERN RECOGNITION, vol. 43, no. 10, 27 April 2010 (2010-04-27), pages 3605-3620, XP027095447, DOI: 10.1016/j.patcog.2010.04.019 * the whole document * | 1-20 | TECHNICAL FIELDS SEARCHED (IPC)  G06N |

-/--

The present search report has been drawn up for all claims

| Place of search | Date of completion of the search | Examiner |
|---|---|---|
| The Hague | 10 January 2014 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches
Patentamt
European
Patent Office
Office européen
des brevets

Application Number

EP 13 30 6123

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | E. WADE, M. J. MATARIC: "Design and testing of lightweight inexpensive motion-capture devices with application to clinical gait analysis", PROCEEDINGS OF THE 3RD INTERNATIONAL ICST CONFERENCE ON PERVASIVE COMPUTING TECHNOLOGIES FOR HEALTHCARE (PERVASIVEHEALTH'3), 1 April 2009 (2009-04-01), XP031500382, DOI: 10.4108/ICST.PERVASIVEHEALTH2009.6026 * the whole document * ----- | 1-20 | |

TECHNICAL FIELDS
SEARCHED (IPC)

The present search report has been drawn up for all claims

| Place of search | Date of completion of the search | Examiner |
|---|---|---|
| The Hague | 10 January 2014 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

      .................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010122172 A
- US 20120062718 A
- US 20120059494 A
- US 20120078594 A
- US 20120072165 A
- US 20120158351 A

- US 20120101785 A
- US 20120143094 A
- US 20120165705 A
- EP 2013054561 W
- EP 2013054563 W
- EP 2013058719 W

**Non-patent literature cited in the description**

- **VALÉRIE RENAUDIN ; MELANIA SUSI ; GÉRARD LACHAPELLE.** Step Length Estimation Using Handheld Inertial Sensors. *Sensors,* 2012, vol. 12 (7), 8507-8525

- **RAJKUMAR BUYYA ; JAMES BROBERG ; ANDRZEJ GOSCINSKI.** Cloud Computing: Principles and Paradigms. John Wiley & Sons, Inc,